# EUROPEAN PATENT APPLICATION

(11) **EP 1 340 606 A1**
(43) Date of publication of application: **03.09.2003**
(21) Application number: 03090025.2
(22) Date of filing: 31.01.2003
(51) Int. Cl.: B29C 45/00, B44C 1/17

(54) **Method of applying information on a surface of a layer exposed in an autmotive passenger compartment and a layer made according to the method**

(30) Priority: 27.11.2002 JP 2002343842; 22.02.2002 JP 2002045611
(71) Applicant: Mitsuboshi Belting Ltd., Kobe, Hyogo (JP)
(72) Inventor: Nishitani, Yuzuru, Ichinomiya-city, Aichi (JP)
(74) Representative: Wablat, Wolfgang, Dr.Dr.

(57) **Abstract**

A method of applying information (16) on a surface (14) of a layer (12) to be exposed in an automotive passenger compartment. The method includes the steps of: forming the layer (12); and after forming the layer (12), hot-stamping the information (16) on the surface (14) of the layer (12). The invention is also directed to a layer (12) for use in an automotive passenger compartment and having an exposed surface (14) with information (16) hot-stamped thereon.

## Description

### BACKGROUND OF THE INVENTION

### Field of the Invention

This invention relates to layers as used in an automotive passenger compartment and, more particularly, to a layer having an exposed surface with information applied thereto.

### Background Art

Airbags are routinely installed in automobiles. Typically, a decorative layer, exposed within the passenger compartment, has a designation "SRS airbag", with "SRS" being an acronym for "supplemental restraint system". This information/logo is typically applied to the surface of the layer in the vicinity of where the airbag is located to advise the vehicle occupants of both the presence, and approximate location, of the airbag. Typically, the airbag designation will be placed directly on an airbag cover in front, or to the side, of the passenger seat, as on the instrument panel, a side door, or a part of the steering wheel.

In the past, the airbag information/logo has commonly been applied by adhering a sheet, with the information Thereon, through an appropriate adhesive, or the like. The sheet, with the information/logo thereon, is adhered in a separate step after the formation of the layer having the surface to which the information/logo is to be applied. Typically, the interior layer is molded, after which the information/logo is applied. This may account for a relatively high production cost. Such a system is disclosed in Unexamined Published Japanese Patent Application No. 9-86325.

More recently, a practice has been developed for molding the information/logo relating to the airbag simultaneously with the mold formation of the layer on which the information/logo is applied. The lettering is integrally molded in a recessed form in the layer during the layer formation. During the formation of the layer, whether by powder slush molding, recess vacuum molding, or the like, the layer is brought into contact with a mold element having the information/logo thereon.

After repeated usage, the mold, which produces the lettering. may wear to the point that the lettering is not formed to the desired depth and may not have the desired clarity.

In the case of powder slush molding or recess vacuum molding, the design draw is commonly engraved in an electroformed mold. The molding cost may thus be high since no appreciable savings may be realized compared to the previously-described adhesive bonding sheet method.

Additionally, with the recessed information/logo, the region in the recess has the same color as the surface in which it is formed. As a result, the information/logo may not stand out to the extent desired, whereby a vehicle occupant may not readily recognize the location of the airbag or its existence.

### SUMMARY OF THE INVENTION

In one form, the invention is directed to a method of applying information on a surface of a layer to be exposed in an automotive passenger compartment. The method includes the steps of: forming the layer; and after forming the layer, hot-stamping the information on the surface of the layer.

The surface may be made from a thermoplastic olefin resin.

The step of hot-stamping the information may involve providing a transfer sheet with the information thereon and pressing the transfer sheet against the surface of the layer with a silicone rubber transfer surface.

The hot-stamping may be carried out with the silicone rubber transfer surface at a temperature of 145°-200°C.

The transfer sheet may be pressed against the surface of the layer with a pressure from 4.0 to 9.2 MPa.

In one form, the transfer surface is pressed against the surface of the layer so as to produce an indentation of 1.8 to 2.5 mm.

The transfer surface may be pressed against the surface of the layer for from 7-10 seconds.

The information may relate to an airbag and may be, for example, a logo which identifies the location of the airbag.

In one form, the surface of the layer has a first color and the information is defined by a second color that is different than the first color.

The invention is further directed to a layer for use in an automotive passenger compartment, which layer has a body with an exposed surface, and information applied to the exposed surface of the layer by hot-stamping.

The information may relate to an airbag and may be, for example, a logo or a specification for the airbag.

The surface upon which the information is applied may be a thermoplastic olefin resin.

In one form, the hot-stamping is performed using a silicone rubber transfer surface at a temperature of 145°-200°C, at a pressure of 4.0 to 9.2 MPa, with an indentation of 1.8 to 2.5 mm, and a stamping time of 7-10 seconds.

In one form, the information has a draw depth of 70 to 100 microns.

### BRIEF DESCRIPTION OF THE DRAWINGS

Fig. 1 is a schematic representation of a layer within an automotive vehicle environment in which information is applied according to the present invention;
Fig. 2 is a perspective view of an instrument panel within an automotive vehicle compartment and having information applied thereto according to the present invention; and
Fig. 3 is a schematic representation of a system for hot-stamping information to a layer, such as shown in Figs. 1 and 2, according to the present invention.

### DETAILED DESCRIPTION OF THE DRAWINGS

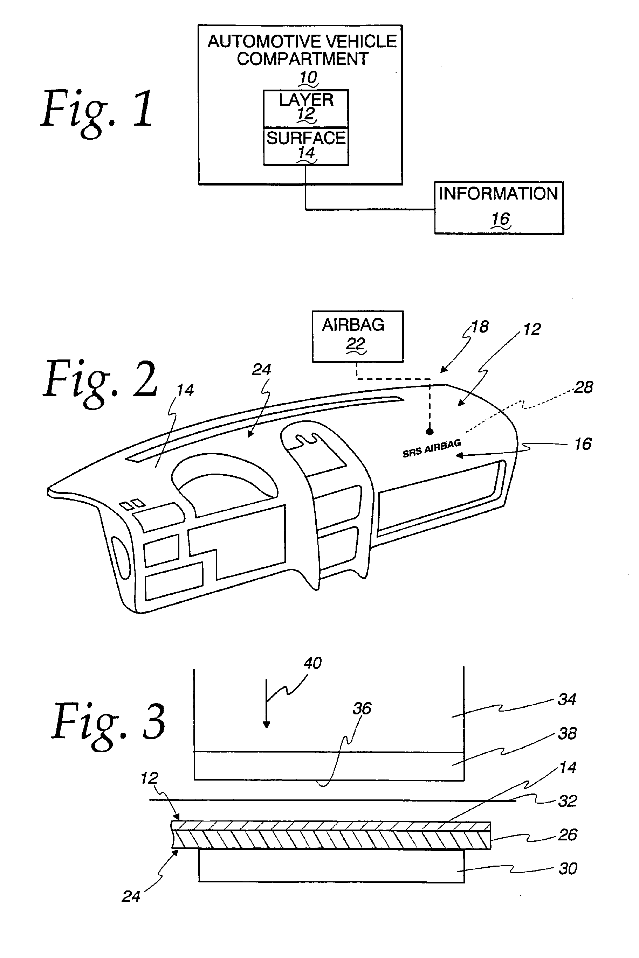

In Fig. 1, a generic environment for practicing the present invention is shown within a representative automotive vehicle compartment 10. Within the automotive vehicle compartment 10, a layer 12 is provided with a surface 14 exposed within the compartment 10. The layer 12 may be applied anywhere within the vehicle compartment 10 and is described in a preferred form in the vicinity of the location of an airbag. The airbag may be integrated into a steering wheel, incorporated into an instrument panel, and/or provided on door sides, or elsewhere, as appropriate. According to the invention, information 16 is applied to the layer 12 so as to be visible at the surface 14 of the layer 12 that is exposed within the vehicle compartment 10.

A specific location for the information 16, applied according to the present invention, is shown in Fig. 2 as part of an instrument panel at 18. The layer 12 on the instrument panel 18 is applied over an airbag 22. The layer 12, as seen also in Fig. 3, is part of a body 24 made, in this embodiment, from multiple layers. Specifically, the body 24 has a core layer 26 made from a PP resin, with which the layer 12 is integrally formed, as by an injection molding process, or otherwise. The layer 12 is made from a thermoplastic olefin resin that defines The surface 14, which is exposed to view by the occupant(s) of the vehicle compartment 10.

In this embodiment, the information 16 is descriptive of the air bag 22. More particularly, the information 16 is shown as a printed logo "SRS airbag". The logo is only representative of the contemplated information 16 and advises the vehicle occupant of The existence, and approximate location, of the airbag 22. The information 16 could take other forms, such as an airbag specification, etc. In this embodiment, the information/logo 16 is applied directly over a door 28 formed on the instrument panel 18, and through which the airbag 22 projects as it is activated.

By making the layer 12 from a thermoplastic olefin resin, the information/logo 16 can be applied and used over a wide temperature range. The resin also lends itself To the selection of different colors, through the introduction of a pigment, to produce commonly selected gray, olive, or brown hues at the surface 14. Preferably, the information/logo 16 is printed, by the method described below, in a color different from that of the resin and defining The exposed surface 14.

According to the invention, the information/logo 16 is not defined in any recess during the injection molding process which unites the core layer 26 and exposed layer 12. Instead, the information/logo 16 is transferred and printed upon the surface 14 after the mold formation process for the composite body 24, consisting of the layer 12 and core layer 26. Thus, the mold used to carry out the injection molding process need not be engraved or preformed to permit simultaneously formation of the body 24 and impression of The information/logo 16. This potentially reduces mold manufacturing costs.

Additionally, information/logo 16 can be repeatedly clearly applied without blurring as may occur by forming the information during the molding process. That is, there is no reliance on a reusable mold that tends to wear after numerous repetitions of the injection molding process.

According to one form of the invention, the body 24 is formed by integrally molding the core layer 26 and layer 12, as by an injection molding process, or otherwise. The body 24 is then placed upon a support jig 30. A transfer sheet 32, with the information/logo 16 thereon, is placed between the surface 14 and a hot plate 34. The information/logo 16 is transferred and printed by the hot plate 34. The hot plate 34 has a transfer surface 36 defined by a silicone rubber element 38. According to the invention, the silicone rubber transfer surface 36 is heated to a temperature of 145°-200°C and, more preferably, 180-200°C. The hot plate 34 is pressed in the direction of the arrow 40 against the surface 14, with the transfer sheet 32 captively therebetween. The hot plate 34 is advanced to apply a pressure of 4.0 to 9.2 MPa, thereby producing an indentation of 1.8 to 2.5 mm. The pressure is preferably maintained for 7-10 seconds.

It has been found that if the temperature of the transfer surface 36 is lower than 145°C, the information/logo 16 does not stick with the desired tenacity and tends to peel. If the temperature exceeds 200°C, the contours of the letters on the information/logo 16 tend to become blurred.

Similarly, if the application pressure is less than 4.0 MPa, the information/logo 16 does not adhere effectively and tends to peel. Pressure in excess of 9.2 MPa tends to cause a stamped trace, or shine, from the silicone rubber surface 36 upon the information/logo 16.

Also, the information/logo may not effectively stick and is prone to peeling with the indentation smaller than 1.8 mm. An indentation greater than 2.5 mm may result in a stamped trace, or shine, from the silicone rubber surface 36.

In the event that the stamping pressure is applied for less than 7 seconds, again the information/logo may not effectively stick and may be prone to peeling. An application time of greater than 10 seconds may produce a stamped trace/shine from the silicone rubber surface 36.

Utilizing the above-described hot-stamping process To effect transfer/printing, the information/logo 16 can be clearly placed on the surface 14 with a draw depth of 70 to 100 microns in contrasting colors so as to be positively placed and clearly visible.

In one exemplary process, according to the invention, an instrument panel was injection-molded with a thermoplastic olefin resin layer having an olive color. The instrument panel was disposed in a hot-stamping apparatus with a transfer sheet having a logo "SRS" placed on the hot-stamping apparatus. The logo "SRS" was transferred to and printed on the face of the instrument panel with the silicone rubber surface temperature at 190°C, an indenting pressure of 8.0 MPa, an indentation of 2.0 mm, and for a duration of 10 seconds. The resulting instrument panel had a draw depth of approximately 80 microns and was made with gray lettering thereon. The logo "SRS" was firmly maintained in place and was satisfactory for use within an automotive vehicle compartment. Visibility was clear and excellent.

While the invention has been described with particular reference to the drawings, it should be understood that various modifications could be made without departing from the spirit and scope of The present invention.

## Claims

1. A method of applying information on a surface of a layer to be exposed in an automotive passenger compartment. The method comprising the steps of:
forming the layer; and
after forming the layer, hot-stamping the information on the surface of the layer.

2. The method of applying information on a surface of a layer to be exposed in an automotive passenger compartment according to claim 1 wherein the surface comprises a thermoplastic olefin resin.

3. The method of applying information on a surface of a layer to be exposed in an automotive passenger compartment according to claim 1 wherein the step of hot-stamping the information comprises providing a transfer sheet with the information thereon and pressing the transfer sheet against the surface of the layer.

4. The method of applying information on a surface of a layer to be exposed in an automotive passenger compartment according to claim 2 wherein the step of hot-stamping the information comprises providing a transfer sheet with the information thereon and pressing the transfer sheet against the surface of the layer.

5. The method of applying information on a surface of a layer to be exposed in an automotive passenger compartment according to claim 3 wherein the step of hot-stamping the information comprises hot-stamping the information with a silicone rubber transfer surface at a temperature of 145°-200°C.

6. The method of applying information on a surface of a layer to be exposed in an automotive passenger compartment according to claim 4 wherein the step of hot-stamping the information comprises hot-stamping the information with a silicone rubber transfer surface at a temperature of 145°-200°C.

7. The method of applying information on a surface of a layer to be exposed in an automotive passenger compartment according to claim 1 wherein the step of hot-stamping the information comprises providing a transfer sheet with the information thereon and pressing the transfer sheet against the surface of The layer with a transfer surface.

8. The method of applying information on a surface of a layer to be exposed in an automotive passenger compartment according to claim 7 wherein the transfer surface is at a temperature of 145°-200°C.

9. The method of applying information on a surface of a layer to be exposed in an automotive passenger compartment according to any of claims 3-7 wherein the transfer surface is pressed against the surface of the layer with a pressure of from 4.0 to 9.2 MPa.

10. The method of applying information on a surface of a layer to be exposed in an automotive passenger compartment according to any of claims 3-9 wherein the transfer sheet is pressed against the surface of the layer so as to produce an indentation of 1.8 to 2.5 mm.

11. The method of applying information on a surface of a layer to be exposed in an automotive passenger compartment according To any of claims 3-10 wherein the transfer surface is pressed against the surface of The layer for 7-10 seconds.

12. The method of applying information on a surface of a layer to be exposed in an automotive passenger compartment according to any of claims 1-11 wherein the information comprises a logo

13. The method of applying information on a surface of a layer to be exposed in an automotive passenger compartment according to any of claims 1-11 wherein the information relates to an airbag.

14. The method of applying information on a surface of a layer to be exposed in an automotive passenger compartment according to any of claims 12 or 13 wherein the surface of the layer has a first color and the information is defined at least partially by a second color that is different than the first color.

15. A layer for use in an automotive passenger compartment, the layer comprising:
a body having a layer with an exposed surface; and
information applied to the exposed surface of the layer by hot-stamping.

16. The layer for use in an automotive passenger compartment according to claim 15 wherein the information relates to an airbag.

17. The layer for use in an automotive passenger compartment according to claim 15 wherein the information comprises a logo.

18. The layer for use in an automotive passenger compartment according to any of claims 15-17 wherein the surface comprises a thermoplastic olefin resin.

19. The layer for use in an automotive passenger compartment according to any of claims 15-18 wherein the hot-stamping is performed using a silicone rubber transfer surface at a temperature of 145°-200°C at a pressure of 4.0 to 9.2 MPa, with an indentation of 1.8 to 2.5 mm, and a stamping Time of 7-10 seconds.

20. The layer for use in an automotive passenger compartment according to any of claims 15-19 wherein the information has a draw depth of 70 to 100 microns.
